# EUROPEAN PATENT APPLICATION

(11) **EP 4 354 811 A1**
(43) Date of publication of application: **17.04.2024**
(21) Application number: 23193097.5
(22) Date of filing: 24.08.2023
(51) Int. Cl.: H04L 25/03, H04L 27/26

(54) **SPECTRAL EXTENSION OF TRANSMISSION SIGNAL**

(30) Priority: 12.10.2022 FI 20225924
(71) Applicant: Nokia Technologies Oy, 02610 Espoo (FI)
(72) Inventor: Hooli, Kari Juhani, 90620 Oulu (FI); Tiirola, Esa Tapani, 90620 Oulu (FI); Maso, Marco, 92130 Issy les Moulineaux (FR); Nhan, Nhat-Quang, 51100 Reims (FR); Lehti, Arto, 92160 Antony (FR); Tervo, Oskari, 90630 Oulu (FI)
(74) Representative: Nokia EPO representatives

(57) **Abstract**

There is provided an apparatus comprising: at least one processor; and at least one memory storing instructions that, when executed by the at least one processor, cause the apparatus at least to perform: receiving a configuration comprising a resource allocation; determining a spectral extension for an inband allocation by determining a first excess band on one side of the inband allocation and a second excess band on another side of the inband allocation; determining an inner portion of the first excess band to obtain a first inner excess band; determining an inner portion of the second excess band to obtain a second inner excess band; determining an outer portion of the first excess band to obtain a first outer excess band; determining an outer portion of the second excess band to obtain a second outer excess band; generating, based on an inband signal, a spectral extension data signal at least on resources on the first inner excess band and on the second inner excess band; generating, based on the inband signal and the first excess band and the second excess band, a reference signal at least on resources on the first inner excess band and on the second inner excess band; generating an outer excess band signal on resources on the first outer excess band and on the second outer excess band, wherein the outer excess band signal comprises a different type of signal than the spectral extension data signal and the reference signal.

## Description

### FIELD

Various example embodiments relate to spectral extension of transmission signal.

### BACKGROUND

Network coverage is important in wireless communication systems, for example, in various cellular communication networks, such as, in cellular communication networks operating according to 5G radio access technology. 5G radio access technology may also be referred to as New Radio, NR, access technology. 3rd Generation Partnership Project, 3GPP, develops standards for 5G/NR and one of the topics in the 3GPP discussions is related to coverage enhancements in 5G-Advanced. Such enhancements may also be beneficial in other wireless communication networks, such as in 6G networks in the future, as well.

### SUMMARY

According to some aspects, there is provided the subject-matter of the independent claims. Some example embodiments are defined in the dependent claims. The scope of protection sought for various example embodiments is set out by the independent claims. The example embodiments and features, if any, described in this specification that do not fall under the scope of the independent claims are to be interpreted as examples useful for understanding various example embodiments.

According to a an aspect, there is provided a method comprising: receiving a configuration comprising a resource allocation; determining a spectral extension for an inband allocation by determining a first excess band on one side of the inband allocation and a second excess band on another side of the inband allocation; determining an inner portion of the first excess band to obtain a first inner excess band; determining an inner portion of the second excess band to obtain a second inner excess band; determining an outer portion of the first excess band to obtain a first outer excess band; determining an outer portion of the second excess band to obtain a second outer excess band; generating, based on an inband signal, a spectral extension data signal at least on resources on the first inner excess band and on the second inner excess band; generating, based on the inband signal and the first excess band and the second excess band, a reference signal at least on resources on the first inner excess band and on the second inner excess band; generating an outer excess band signal on resources on the first outer excess band and on the second outer excess band, wherein the outer excess band signal comprises a different type of signal than the spectral extension data signal and the reference signal. The method may be performed by a user equipment, or by a control device configured to control the functioning thereof, when installed therein.

According to an embodiment, the method comprises: transmitting the spectral extension data signal and the reference signal at least on the resources of the inband, the first inner excess band and the second inner excess band; and transmitting the signal, which is of a different type than the spectral extension data signal and the reference signal, on the resources of the first outer excess band and the second outer excess band.

According to an embodiment, the determining the inner portion of the first excess band to obtain the first inner excess band comprises: determining an amount of the first inner excess band resources based on a ratio defining a portion of the first excess band to correspond to the first inner excess band.

According to an embodiment, the ratio is configured by network or determined by the apparatus.

According to an embodiment, the first excess band and the second excess band are symmetrically allocated on both sides of the inband allocation.

According to an embodiment, the outer excess band signal comprises a remaining portion of the spectral extension data signal for data symbols or a remaining portion of the reference signal for reference signal symbols.

According to an embodiment, the remaining portion of the spectral extension data signal or the remaining portion of the reference signal are weighted by a different type of a frequency domain spectral shaping function than the signals on the inband and the first inner excess band and the second inner excess band.

According to an embodiment, the outer excess band signal comprises a remaining portion of the spectral extension data signal for data symbols and peak reduction tones for reference signal symbols.

According to an embodiment, the outer excess band signal comprises peak reduction tones for data symbols and for reference signal symbols.

According to an embodiment, the outer excess band signal is characterized by at least one of: - a number of resource elements on the outer excess bands varies from a symbol to another; - a number of resources elements is different for data symbols and reference signal symbols; - the outer excess band signal is a zero power reference signal; - a transmit power on the outer excess bands may be limited with a value specified for the outer excess bands; or - a power spectral density on the outer excess bands may be limited with a value specified for the outer excess bands.

According to an embodiment, the method comprises performing frequency domain spectral shaping at least for resources on the inband, the first inner excess band and the second inner excess band.

According to an embodiment, the method comprises performing frequency domain spectral shaping for resources on the inband, the first inner excess band, the second inner excess band, the first outer excess band and the second outer excess band.

According to an embodiment, the reference signal is a demodulation reference signal.

According to an aspect, there is provided an apparatus comprising means for performing at least the method of the above aspect and the embodiments thereof.

According to an embodiment, the means comprises at least one processor; and at least one memory storing instructions that, when executed by the at least one processor, cause the performance of the apparatus.

A (non-transitory) computer readable medium comprising instructions that, when executed by an apparatus, cause the apparatus to perform at least: the method of the above aspect and the embodiments thereof.

A computer program comprising instructions, which, when executed by an apparatus, cause the apparatus to perform a method of the above aspect and the embodiments thereof.

According to an aspect, there is provided a method comprising: transmitting, to a user equipment, a configuration comprising a resource allocation, wherein the configuration further comprises instructions for the user equipment for: determining spectral extension for an inband allocation, the determining comprising determining a first excess band on one side of the inband allocation and a second excess band on another side of the inband allocation; and determining a first inner excess band and a second inner excess band; and determining a first outer excess band and a second outer excess band. The method may be performed by a network node, or by a control device configured to control the functioning thereof, when installed therein.

According to an embodiment, the method comprises monitoring a transmission using inband; or using the inband and the inner excess bands.

According to an aspect, there is provided an apparatus comprising means for performing at least the method of the above aspect and the embodiments thereof.

According to an embodiment, the means comprises at least one processor; and at least one memory storing instructions that, when executed by the at least one processor, cause the performance of the apparatus.

A (non-transitory) computer readable medium comprising instructions that, when executed by an apparatus, cause the apparatus to perform at least: the method of the above aspect and the embodiments thereof.

A computer program comprising instructions, which, when executed by an apparatus, cause the apparatus to perform a method of the above aspect and the embodiments thereof.

### BRIEF DESCRIPTION OF THE DRAWINGS

Some example embodiments will now be described with reference to the accompanying drawings.
Fig. 1 shows, by way of example, a network architecture of communication system;
Fig. 2a shows, by way of example, a block diagram of NR UL transmitter with frequency domain spectral shaping and spectral extension;
Fig. 2b shows, by way of example, a block diagram for tone reservation.
Fig. 3 shows, by way of example, a flowchart of a method;
Fig. 4 shows, by way of example, inband allocation and excess band allocation;
Fig. 5 shows, by way of example, a table of signal content for inband, inner excess band and outer excess band resources;
Fig. 6 shows, by way of example, power levels for inband and excess band for two exemplary filters; and
Fig. 7 shows, by way of example, a block diagram of an apparatus.

### DETAILED DESCRIPTION

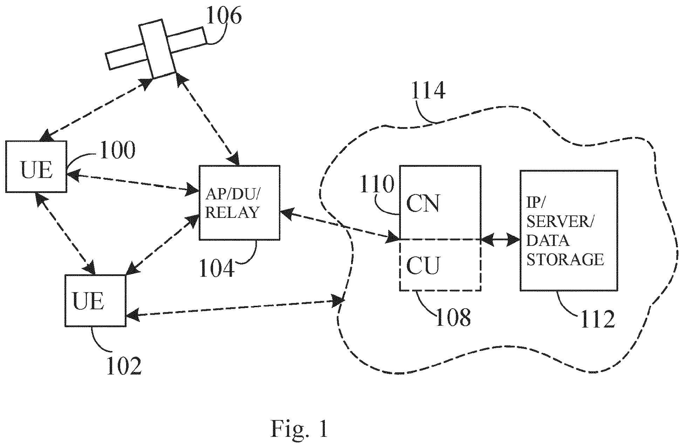

Fig. 1 shows, by way of an example, a network architecture of communication system. In the following, different exemplifying embodiments will be described using, as an example of an access architecture to which the embodiments may be applied, a radio access architecture based on long term evolution advanced (LTE Advanced, LTE-A) or new radio (NR), also known as fifth generation (5G), without restricting the embodiments to such an architecture, however. It is obvious for a person skilled in the art that the embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth^{®}, personal communications services (PCS), ZigBee^{®}, wideband code division multiple access (WCDMA), systems using ultra-wideband (UWB) technology, sensor networks, mobile ad-hoc networks (MANETs) and Internet Protocol multimedia subsystems (IMS) or any combination thereof.

The example of Fig. 1 shows a part of an exemplifying radio access network. Fig. 1 shows user devices or user equipments (UEs) 100 and 102 configured to be in a wireless connection on one or more communication channels in a cell with an access node, such as gNB, i.e. next generation NodeB, or eNB, i.e. evolved NodeB (eNodeB), 104 providing the cell. The physical link from a user device to the network node is called uplink (UL) or reverse link and the physical link from the network node to the user device is called downlink (DL) or forward link. It should be appreciated that network nodes or their functionalities may be implemented by using any node, host, server or access point etc. entity suitable for such a usage. A communications system typically comprises more than one network node in which case the network nodes may also be configured to communicate with one another over links, wired or wireless, designed for the purpose. These links may be used for signalling purposes. The network node is a computing device configured to control the radio resources of the communication system it is coupled to. The network node may also be referred to as a base station (BS), an access point or any other type of interfacing device including a relay station capable of operating in a wireless environment. The network node includes or is coupled to transceivers. From the transceivers of the network node, a connection is provided to an antenna unit that establishes bi-directional radio links to user devices. The antenna unit may comprise a plurality of antennas or antenna elements. The network node is further connected to core network 110 (CN or next generation core NGC). Depending on the system, the counterpart on the CN side can be a serving gateway (S-GW, routing and forwarding user data packets), packet data network gateway (P-GW), for providing connectivity of user devices (UEs) to external packet data networks, or mobile management entity (MME), etc. An example of the network node configured to operate as a relay station is integrated access and backhaul node (IAB). The distributed unit (DU) part of the IAB node performs BS functionalities of the IAB node, while the backhaul connection is carried out by the mobile termination (MT) part of the IAB node. UE functionalities may be carried out by IAB MT, and BS functionalities may be carried out by IAB DU. Network architecture may comprise a parent node, i.e. IAB donor, which may have wired connection with the CN, and wireless connection with the IAB MT.

The user device, or user equipment UE, typically refers to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction.

Additionally, although the apparatuses have been depicted as single entities, different units, processors and/or memory units (not all shown in Fig. 1) may be implemented inside these apparatuses, to enable the functioning thereof.

5G enables using multiple input - multiple output (MIMO) technology at both UE and gNB side, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 7GHz, cmWave and mmWave, and also being integratable with existing legacy radio access technologies, such as the LTE. Below 7GHz frequency range may be called as FR1, and above 24GHz (or more exactly 24- 52.6 GHz) as FR2, respectively. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 7GHz - cmWave, below 7GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in Fig. 1 by "cloud" 114). The communication system may also comprise a central control entity, or a like, providing facilities for networks of different operators to cooperate for example in spectrum sharing.

Edge cloud may be brought into radio access network (RAN) by utilizing network function virtualization (NVF) and software defined networking (SDN). Using edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloud RAN architecture enables RAN real time functions being carried out at the RAN side (in a distributed unit, DU 104) and non-real time functions being carried out in a centralized manner (in a centralized unit, CU 108).

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite 106 in the constellation may cover several satellite-enabled network entities that create on-ground cells. The on-ground cells may be created through an on-ground relay node 104 or by a gNB located on-ground or in a satellite.

Modulated symbols and/or reference signals may be converted to a waveform, which is a baseband signal before it is mixed to radio frequency (RF) signal and transmitted over the air-interface. In 5G NR, two waveforms have been specified: cyclic prefix orthogonal frequency division multiplexing (CP-OFDM) waveform and discrete Fourier transform spread orthogonal frequency division multiplexing (DFT-s-OFDM) waveform. CP-OFDM may be applicable to both uplink and downlink, and DFT-s-OFDM may be applicable to uplink, e.g. only uplink.

In NR, DFT-s-OFDM supports a single transmission layer (rank = 1) per user whereas CP-OFDM may support more than one layer (rank ≥ 1). This means that CP-OFDM may offer a higher throughput and capacity than DFT-s-OFDM. In contrast, DFT-s-OFDM has a lower peak-to-average power ratio (PAPR) than its CP-OFDM counterpart, which allows DFT-s-OFDM being used with a higher transmit power and thus offering better coverage.

DFT-s-OFDM is generated by adding a transform precoding block before the processing blocks used for generating CP-OFDM. The transform precoding block may be a discrete Fourier transform (DFT) block, implemented e.g with fast Fourier transform (FFT) block, that converts a time domain signal into frequency domain signal.

A frequency domain spectrum shaping (FDSS) function may be used to further reduce the PAPR and/or lower Cubic Metric (CM). This entails further lower Maximum Power Reduction (MPR), and hence higher maximum transmission power for coverage enhancement.

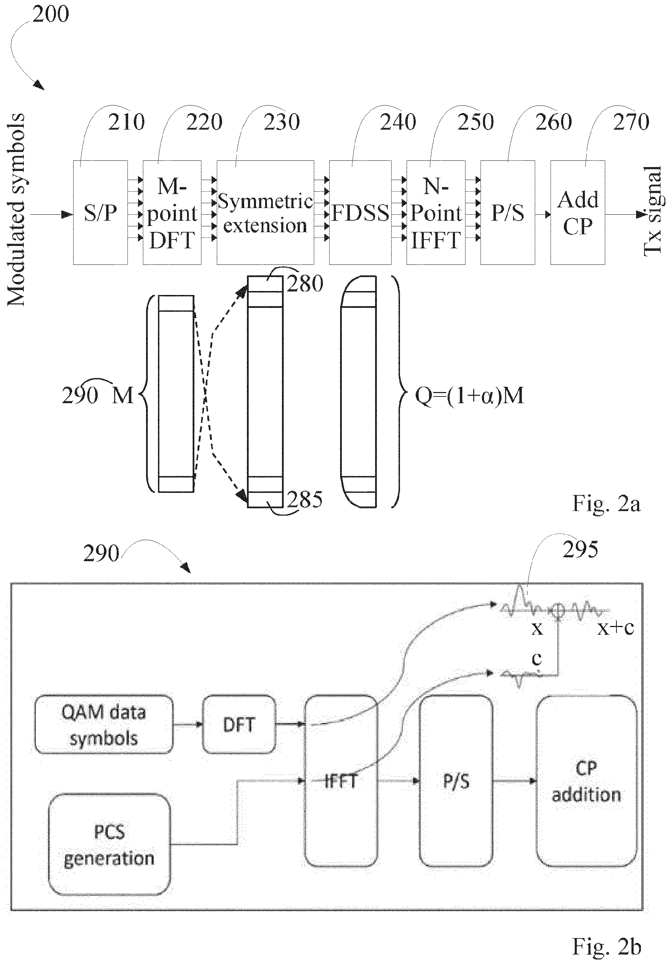

The FDSS may be applied with or without spectral extension. Fig. 2a shows, by way of example, a block diagram 200 of NR LTL transmitter with frequency domain spectral shaping and spectral extension. Input comprises modulated symbols, which may be converted by a serial to parallel converter 210. In spectral shaping, the transition band bins are weighted by the FDSS function 240 before mapping to the inverse fast Fourier transform (IFFT) 250 input. The FDSS with spectral extension has the additional cyclic extension block 230 which results in excess bands.

Excess band subcarriers 280, 285 comprise replicas of a portion of the data symbols transmitted on the inband 290.

The inband covers the occupied resource elements (REs) after DFT-block 220, and the inband size is M.

Excess band or bands 280, 285 covers the REs for spectral extension, and the excess band size is (Q-M).

Total allocation size Q is the sum of the inband size and the excess band size. The total allocation covers the occupied REs after symmetric extension block 230.

The amount of extension can be expressed by means of an extension factor *α*: *α* = (*Q* - *M*)/*Q.* The extension factor is given by (excess band size / total allocation size).

After IFFT block 250 the signal is converted by paraller to serial converter 260. Cyclic prefix (CP) may be added by block 270 before the signal is transmitted.

Spectral extension may reduce the PAPR since the effective pulses have larger time separation. Spectral extension may reduce the inter-symbol interference, which is added when FDSS is introduced. Spectral extension may provide further frequency diversity, since the excess band is also data and it may be used by the receiver of a network node, e.g. gNB.

The FDSS function without spectrum extension is a tradeoff between demodulation performance and the Tx power gain while shaping with spectrum extension is a tradeoff between spectral efficiency and Tx power gain

The exact FDSS function is not currently defined in the NR standard, but the performance requirements have been specified to define the boundary conditions for the implementation. The system performance may be preserved by means of minimum requirements related to spectrum flatness, in-band/out-of-band emission and error vector magnitude (EVM). For example, the EVM equalizer flatness may be used for setting the UE Tx spectrum flatness requirements for pi/2 binary phase shift keying modulation scheme (pi/2-BPSK) with FDSS. The peak-to-peak variation of the EVM equalizer coefficients contained within the frequency range of the uplink allocation is not allowed to exceed the limits defined by the requirements.

PAPR may be reduced by tone reservation (TR). With this technique, signals in a subset of available sub-carriers may be designed to cancel the peaks in the original waveform and thereby the PAPR of the waveform may be reduced. These subcarriers are referred to as peak reduction tones (PRTs), or peak cancellation signal. To preserve the EVM, there is no overlap between the PRTs and the subcarriers used for transmitting the data.

Fig. 2b shows, by way of example, a block diagram 290 for tone reservation. Tone reservation is a method to decrease PAPR of a multicarrier signal. The PAPR may be decreased by using two different set of tones: set of tones to carry the data; and set of tones to carry the peak cancellation signals (PCS).

The goal is for the reserved tones to generate "counter peaks" (signal c) in time-domain where the data signal x has larger peaks, as shown by signals 295. It has to be noted that in order to generate the PCS, knowledge about the time-domain peaks after IFFT is needed, which may require iterative algorithm.

QAM (quadrature amplitude modulation) is just an example. Tone reservation is equally applicable to PSK (phase shift keying).

Demodulation reference signal (DMRS) is used by a receiver for channel estimation for demodulation of associated physical channel. In case of DFT-s-OFDM waveform, DMRS is time multiplexed with physical uplink shared channel (PUSCH) data on separate symbols. PUSCH DMRS configuration type 1 may be used. This means that DMRS samples are mapped to every other subcarrier. This allows for DMRS frequency domain multiplexing for different UEs, that is, multi-user MIMO (MU-MIMO).

In addition to frequency division multiplexing (FDM), also code domain multiplexing of DMRS is supported with orthogonal cover code (OCC). Length-2 OCCs may be applied over two different OFDM symbols (denoted as *wₜ*) as well as over adjacent DMRS subcarriers within the same OFDM symbol (denoted as *w_{f}*). In the case of *wₜ*, the multiplexed LTEs, e.g. each multiplexed UE, should use the same DMRS sequence on both OFDM symbols to maintain OCC orthogonality. The DMRS sequences may be different between UEs in the case of *wₜ.* In the case of *w_{f}*, all multiplexed UEs should use the same DMRS sequence to maintain OCC orthogonality.

Low PAPR sequences are used with DFT-s-OFDM. NR support two types of low PAPR sequence generations. In Type 1 sequence generation, the sequences are extended Zadoff-Chu sequences for PUSCH allocations of 6 RBs (sequence length 36) or wider. This means that Zadoff-Chu sequences are determined based on the largest prime number smaller than the required sequence length. To obtain DMRS sequence of required length, the obtained sequence is cyclically extended at the end to the required length. For sequence lengths of 6, 12, 18, and 24, the sequences are comprised of predefined (tabulated) quadrature phase shift keying (QPSK) samples in frequency.

In Type 2 sequence generation for pi/2-BPSK modulation scheme, the sequences are pseudo-random pi/2-BPSK symbols for PUSCH allocations of 5 RBs (sequence length 30) or wider. For sequence lengths of 12, 18, and 24, the sequences are comprised of predefined (tabulated) pi/2-BPSK symbols. For sequence length of 6, the sequences are comprised of predefined (tabulated) 8-PSK symbols.

To achieve full gain potential of FDSS spectral extension, modification on receiver side may be needed. For example, at the receiver, the excess band subcarriers may be summed to the corresponding inband subcarriers before minimum mean square error (MMSE) frequency domain equalizer (FDE). This may improve the link budget gain and coverage. However, reference signals (DMRS) may need to exist also in excess band subcarriers for the receiver to be able to combine the excess band signal with the inband signal and hence observe this gain. DMRS uses the same frequency domain spectral shaping as the data symbols, so the effect of spectral shaping may be compensated in the receiver by frequency domain equalization.

Even higher transmission powers and thus larger link budget gains may be achievable if a TR-based approach is used in conjunction with FDSS. This approach may enable complexity reduction at the receiver, i.e. a network node such as gNB. In addition, this approach may enable larger freedom for UE chip vendors to improve the FDSS performance further with implementation specific solutions that are transparent to the network node. This approach may also yield a reasonable combined resource overhead from FDSS and TR and allow for PUSCH detection improvement with the data signal transmitted on the excess band.

A method and an apparatus configured to perform the method are disclosed to provide more freedom to the implementation, while still satisfying the needs for enhanced receiver operation and low PAPR for both data and DMRS.

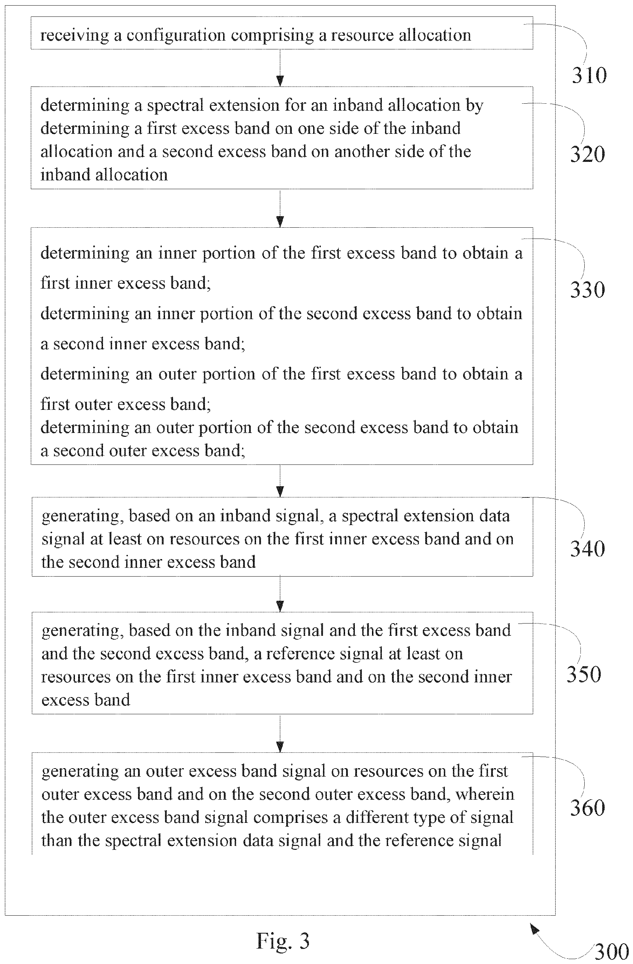

Fig. 3 shows, by way of example, a flowchart of a method. The phases of the illustrated method may be performed by a UE, or by a control device configured to control the functioning thereof, when installed therein. The UE may be, for example, the device 100 of Fig. 1, which is configured to perform at least the method 300. The method 300 comprises receiving 310 a configuration comprising a resource allocation. The method 300 comprises determining 320 a spectral extension for an inband allocation by determining a first excess band on one side of the inband allocation and a second excess band on another side of the inband allocation. The method 300 comprises determining 330 an inner portion of the first excess band to obtain a first inner excess band; determining an inner portion of the second excess band to obtain a second inner excess band; determining an outer portion of the first excess band to obtain a first outer excess band; determining an outer portion of the second excess band to obtain a second outer excess band. The method 300 comprises generating 340, based on an inband signal, a spectral extension data signal at least on resources on the first inner excess band and on the second inner excess band. The method 300 comprises generating 350, based on the inband signal and the first excess band and the second excess band, a reference signal at least on resources on the first inner excess band and on the second inner excess band. The method 300 comprises generating 360 an outer excess band signal on resources on the first outer excess band and on the second outer excess band, wherein the outer excess band signal comprises a different type of signal than the spectral extension data signal and the reference signal.

In the description below, demodulation reference signal (DMRS) is used as an example of a reference signal. Another example of the reference signal may be, for example, a phase tracking reference signal (PTRS) or a sounding reference signal (SRS).

The LTE may receive, from a network node such as gNB, the configuration comprising the resource allocation and other transmission parameters, for example. The configuration may be performed via radio resource control (RRC) configuration and downlink control information (DCI) comprising LTL grant. FDSS with spectral extension may be configured or predetermined to be applied. The network node may comprise an advanced receiver.

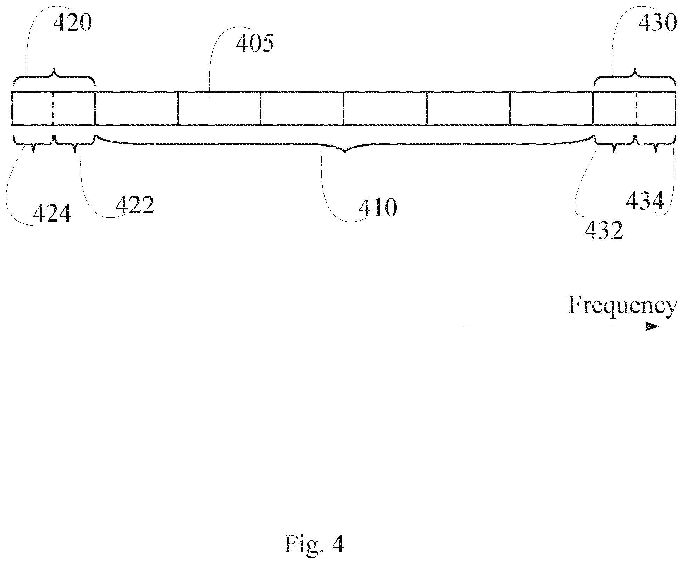

Fig. 4 shows, by way of example, inband allocation and excess band allocation. In the example of Fig. 4, number of the resource blocks (RBs) 405 of the total allocation is 8.

UE may determine spectral extension for an inband allocation 410. The UE may determine a first excess band 420 on one side of the inband allocation 410 and a second excess band 430 on another side of the inband allocation 410. Spectral extension on a signal on the inband allocation may be performed based on an extension factor α. The extension factor may be preconfigured, for example. For example, α may be 0.25. The UE may determine allowed excess band allocation on both sides of the inband allocation. The excess band allocation may be performed, for example, by rounding the amount of spectral extension upwards to the next RB border on a RB grid.

In the example of Fig. 4, the size of the excess bands 420, 430 is one physical resource block (PRB). The size of the excess bands may be larger than one PRB, depending on the size of the total allocation and the extension factor.

The network node, e.g. gNB, may determine the same excess band allocation as the UE.

For example, the first excess band 420 and the second excess band 430 may be allocated symmetrically on both sides of the inband allocation. By using symmetric allocation, the inband portion remains the same as in legacy, which simplifies the specification effort and allows to minimize the changes to current receiver implementation. Symmetric allocation enables application of symmetric FDSS, which simplifies design of efficient FDSS.

The LTE divides or splits the excess bands 420, 430 into inner and outer portions at granularity of subcarriers or REs. For example, size of an excess band on one side may be 2 RBs, that is, 24 REs. The 24 REs may be split between inner and outer portions at granularity of the subcarrier. For example, REs may be split for inner/outer as 12/12, 14/10, 16/8, etc. For example, an inner portion of the first excess band 420 is determined as a first inner excess band 422. An inner portion of the second excess band 430 is determined as a second inner excess band 432.

For example, size of the inner excess band 422, 432 or amount of inner excess band resources may be determined based on a ratio Y. Size of the inner excess 420 band may be Y*(resources of the excess band 420). The inner excess band resources may start right after the outermost inband RE on both sides of the inband resources. For example, the ratio Y may be 0.5, which means that 50% of the excess band 420 may be determined as the inner excess band. As another example, the ratio Y may be 0.6, which means that 60% of the excess band 420 may be determined as the inner excess band. The ratio Y may define a portion of the excess band, which corresponds to the inner excess band.

The UE may determine the ratio Y based on configuration, for example. Determination may be based on implicit or explicit signalling or defined by standard specification, and the determination may be subject to UE capability. For example, the determination may depend on allocation location on the carrier. The UE may determine whether the allocation is an inner, outer or edge allocation on the carrier, and may determine the ratio Y based on that information. Different values of Y may be given for inner, outer or edge allocation, and the LTE may determine the value which corresponds to the location on the carrier. As a further example, the determination of Y may depend on extension factor α. That is, an association between the ratio Y and the extension factor may be predetermined. For example, the system may support two extension factors: 0.25 and 0.33. The ratio Y may be defined separately for those two extension factors. For example, [α = 0.33; Y=50%] and [α = 0.25; Y=75%].

As another example for defining the split of the excess band into inner and outer excess bands, the LTE may be configured either to take or not to take into account frequency domain orthogonal cover code (OCC) multiplexing with w_{f} in the determination of inner excess band. If taken into account, the determined inner excess band always contains both DMRS subcarriers multiplied by the same OCC code w_{f}. In other words, the inner excess band (at the border of inner and outer excess bands) may end at limited subcarriers within a RB: the last inner excess band subcarrier may be one of {2, 3, 6, 7, 10, 11} subcarrier indexes out of the {0, 1, 2, ... 11} subcarrier indexes of a RB for code division multiplex (CDM) group 0. In case of CDM group 1, the last inner excess band subcarrier may be one of {0, 3, 4, 7, 8, 11} subcarrier indexes of a RB.

The UE may determine an outer portion of the first excess band 420 as a first outer excess band 424. The UE may determine an outer portion of the second excess band 430 as a second outer excess band 434. Amount of the outer excess band resources or size of the outer excess band may be equal to excess band allocation subtracted by inner excess band resources. For example, size of the first outer excess band 424 is the amount of the first excess band 420 resources minus amount of the first inner excess band 422 resources. Size of the second outer excess band 434 is the amount of the second excess band 430 resources minus amount of the second inner excess band 432 resources. Outer excess band is the outer part of the excess band just next to the inner portions. Width of the outer band may be given by (1-Y)*(resources of the excess band).

For example, width of outer excess band, as well as the width of total excess band, may be further increased beyond the (previously discussed) outer excess band, given as (1-Y)*excess band. For example, the outer excess band may be increased by a configured number of PRBs/sub-carriers. The outer excess band may be defined by scaling the spectral extension (given by Y*(spectral extension)) with a scaling factor W and by rounding the total allocation upwards to the next integer number of RBs. The increase of outer excess band may be performed on one side of the allocation or on both sides of the allocation. The width of the inband may stay the same. The scaling factor W may be configured or predetermined, for example, together with the ratio Y. Increase of the outer excess band provides more room for implementation based techniques, such as tone reservation.

The network node configured to perform advanced reception of FDSS signal may also perform the division of the excess band into inner excess band and outer excess band as the UE.

The LTE may generate, based on an inband signal, a spectral extension data signal at least on resources on the first inner excess band 422 and on the second inner excess band 432. Example of replicating portion of the data transmitted on the inband is shown in Fig. 2a. Excess band allocation may comprise subcarriers carrying signal spectral extension, and, possibly, empty subcarriers.

The UE may generate, based on the inband allocation and the complete excess band (the first excess and the second excess band) allocation, a DRMS at least on the resources on the first inner excess band 422 and on the second inner excess band 432.

The UE may generate, based on the inband allocation and the complete excess band allocation, DRMS on the inband resources.

DMRS may be determined with mechanism agreed for FDSS with spectral extension based on the resource allocation for both inband and complete excess band. Total allocation provides the length for DMRS sequence. DMRS sequence corresponding the determined DMRS length may be generated. Alternatively, DMRS may be generated based on inband allocation, and with the knowledge of the excess band allocation, DMRS may be extended to the desired length.

The UE may perform FDSS at least for the resources on the inband 410, the first inner excess band 422 and the second inner excess band 432.

The UE may perform FDSS for the resources on the outer excess bands 424, 434. The UE may perform FDSS for the resources on the inband, the first inner excess band, the second inner excess band, the first outer excess band and the second outer excess band.

The LTE may transmit the spectral extension data signal and DMRS at least on the resources, e.g. shaped resources, of the inband, the first inner excess band and the second inner excess band. The spectral extension data signal and the DMRS may be weighted by the same FDSS function. Even if DMRS was determined for the total allocation including the complete excess band, the LTE may be configured to transmit the portion of DMRS mapped to inband and inner excess band resources. For example, the UE may be configured to transmit only the portion of DMRS mapped to inband and inner excess band resources. This will enable flexibility to the UE filter design and PAPR reduction method design. The UE may freely choose to design the use of outer excess bands.

The LTE may transmit the whole DMRS sequence, but LTE is not required to.

The UE may generate a signal on the resources on the first outer excess band 424 and/or on the second outer excess band 434. The signal may be an outer excess band signal. The outer excess band signal may comprise a signal of a different type than the spectral extension data signal and the demodulation reference signal. The signal on the data symbols may be different than the spectral extension data signal and the demodulation reference signal; or the signal on the DMRS symbols may be different than the spectral extension data signal and the demodulation reference signal. For example, the outer excess band signal may be different from the reference signal on the reference symbols, but similar to the spectral extension data signal on the data symbols. For example, a different type of a filter, e.g. FDSS function, may be used for the outer excess band signal than for the inner excess band signal and the inband signal. As another example, the outer excess band signal may comprise PRTs.

The LTE may select the signal from alternatives, which will be explained below. The alternatives may be standardized or defined by LTE implementation. Selection of a signal for an outer excess band may remain transparent to the network node. This is at least partly enabled by determination of DMRS based on the inband and complete excess band.

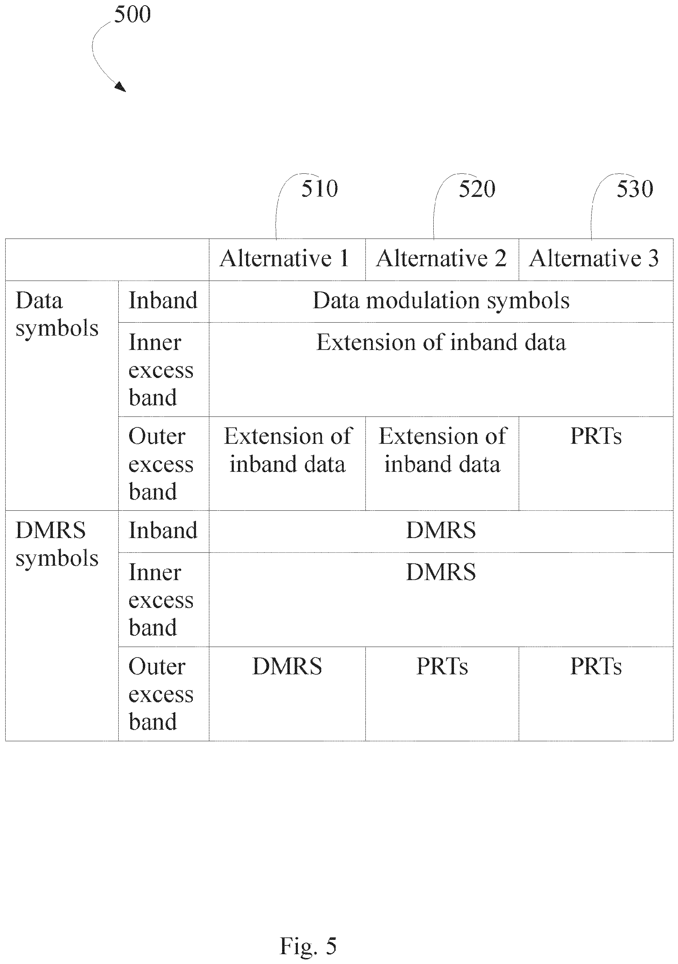

Fig. 5 shows, by way of example, a table 500 of signal content for inband, inner excess band and outer excess band resources. UE implementation may choose the content of the signal from the given alternatives, for example. The outer excess band signal may, however, have a different content than shown on the table 500.

For example (alternative 1 510), the signal for the outer excess bands may be a remaining portion of the spectral extension data signal for data symbols and a remaining portion of the DMRS for DMRS symbols. The spectal extension data signal and the remaining portion of the DMRS may be weighted with a different type of FDSS than the signals on the inband and inner excess bands. Options 1 to 4 of the DMRS are explained below.

As another example (alternative 2 520), the signal for the outer excess bands may be a remaining portion of the spectral extension data signal for data symbols and peak reduction tones (PRTs) for DMRS symbols. For example, optimal peak cancellation signal for different DMRS sequences may be predetermined and stored at the UE, thereby simplifying the complexity of TR scheme. As another example, optimal peak cancellation signal for different DMRS sequences, or at least one equation to compute it, may be hardcoded in the standard specification. It is noted that PRT may be needed for certain DMRS sequences, for example, for those having the biggest PAPR or CM. Otherwise, DMRS resources on outer excess band may be left unused.

As a further example (alternative 3 530), the signal may be PTRs both on the data symbols and on the DMRS symbols.

As a further example, the outer excess band signal may comprise PRTs on the data symbols and DMRS on the DMRS symbols.

As a further example, the signal may use a number of REs from the REs on the outer excess band that varies from a symbol to another. The number of used REs may, for example, be determined so that sufficient or targeted peak reduction is achieved. The signal may use a number of REs on the outer excess band that is different for data symbols and DMRS symbols. For example, the signal on the outer excess band may be zero power reference signal. As another example, the FDSS function applied on the signal on the outer excess band may be of different type than the FDSS function applied on the inner excess band and the inband. The different type of FDSS function may facilitate transmit power or power spectral density on the outer excess band that is suitable for efficient peak reduction. Overall, the transmit power and/or power spectral density on the outer excess band may be limited with a maximum value that is specifically determined for the outer excess band. The maximum value may be dependent e.g. on the total transmit power or on the power spectral density on the inband resources.

The signal generated on the outer excess bands uses the REs, e.g. only the REs, within the outer excess bands that are reserved for the spectral extension signal. For example, in case of DMRS symbol, only every second subcarrier may be used.

Regardless of the scheme, power level for outer excess band REs may be defined by spectrum flatness requirements. The signal may also need to meet requirements such as error vector magnitude (EVM), inband emission (IBE), adjacent channel leakage ratio (ACLR), spectral emission mask (SEM) with at most maximum power reduction (MPR) values defined for spectral extension signal.

When DFT-s-OFDM signal is generated, DMRS may follow configuration type 1 and is time multiplexed with data on separate DFT-s-OFDM symbols. There are several options for generating DMRS signal for FDSS with spectral extension. Options 1 to 4 will be described below.

Option 1: DMRS sequence may be determined based on inband allocation. For example, the DRMS sequence may cover the inband REs, e.g. only the inband REs. After that, symmetric spectral extension may be applied as such also for DMRS with type 1 generation of low-PAPR sequences. This option maximizes similarity with data processing and supports MU-MIMO pairing in terms of DMRS multiplexing with OCC *w_{f}*. However, it produces the highest PAPR at least when DMRS sequence is based on Zadoff-Chu sequence (i.e. type 1 low-PAPR sequence). DMRS sequence length may be determined according to the size of inband and inner excess band (instead of total allocation size including also outer excess band).

DMRS multiplexing with FDM and with *wₜ* OCC is available for all DMRS sequence options.

Option 2: DMRS sequence may be determined based on inband allocation. After that, modified spectral extension for DMRS with type 1 generation of low-PAPR sequences may be performed. For example, modified spectral extension may be applied on SMRS sequences based on Zadoff-Chu sequences, and otherwise symmetric extension may be used. Modified spectral extension has shown to produce low PAPR even with the Zadoff-Chu based DMRS sequences. It also supports MU-MIMO pairing in terms of DMRS multiplexing. DMRS sequence length may be determined according to the size of inband and inner excess band (instead of total allocation size including also outer excess band).

Option 3: Determine DMRS according to spectrally extended signal (i.e. total allocation size) with type 1 generation of low-PAPR sequences. This option supports MU-MIMO pairing but may result in PAPR that is higher than for spectrum extension FDSS QPSK data signal. Thus, Tx power may be limited. DMRS sequence length may be determined according to the size of inband and inner excess band (instead of total allocation size including also outer excess band). Determination of DMRS sequence length according to the size of inband and inner excess band may be restricted to DMRS sequence lengths of 6, 12, 18, 24, 30 or longer, to avoid introduction of new DMRS sequences based on predefined tabularized sequences.

Option 4: Determine DMRS according to spectrally extended signal (i.e. total allocation size) with type 2 generation of low-PAPR sequences. This results in low PAPR but lacks constant amplitude and zero autocorrelation, which may potentially result in equalization loss with QPSK. DMRS sequence length may be determined according to the size of inband and inner excess band (instead of total allocation size including also outer excess band). Determination of DMRS sequence length according to the size of inband and inner excess band may be restricted to DMRS sequence lengths of 6, 12, 18, 24, 30 or longer, to avoid introduction of new DMRS sequences based on predefined tabularized sequences.

A network node, e.g. gNB, may be configured to transmit a configuration to a user equipment. The configuration may comprise, for example, a resource allocation. The configuration may further comprise instruction for the user equipment to perform spectral extension for an inband allocation. The configuration may further comprise instruction for the user equipment to perform excess band division into inner excess bands and outer excess bands, on both sides of the allocation. For example, the configuration may be indicative of the ratio Y or instructions for determining Y based on extension factor, for example.

The network may monitor a transmission using the inband signal, for example, only the inband signal. Alternatively, the network may monitor a transmission using the inband and the inner excess bands, for example, only the inband and the inner excess bands. The network node may monitor using the inband, or using the inband and the inner excess bands, without monitoring using the outer excess bands. The network node might not know what to expect on the outer excess bands, and therefore, the network node might not monitor using the outer excess bands. However, the network node may monitor using the outer excess bands, if the network would know that a signal is to be expected on the outer excess bands.

Advanced receiver means a receiver capable of using excess band for improved detection performance. A baseline receiver utilizes only inband for demodulation. The network node with an advanced receiver, may utilize the signal on the inner excess band resources on the detection of the inband signal. The network node may use the portion of DMRS, e.g. only the portion of DMRS, mapped to inband and inner excess band resources for channel estimation. The network node with advanced receiver may detect the presence of the DMRS in the outer excess band, since it is known, and use the outer excess band signal for detection of inband signal if the UE is transmitting DMRS in the outer excess band. Based on transmitted DMRS, the network node may assume the UE is transmitting also remaining portion of the spectral extension signal.

The method as disclosed herein enables the UE to choose to use a certain part of the excess band, that is, the inner excess band, while giving more flexibility to outer excess band. For example, the LTE may decide to use only the inband and the inner excess band for transmission. This enables enhanced receiver operation, since the inner portion may be expected to include most of the useful power. This is because the outer portion may be more aggressively shaped. Utilization of the inner part of the excess band in the PUSCH detection is important while the outer part of the excess band may be ignored at the receiver.

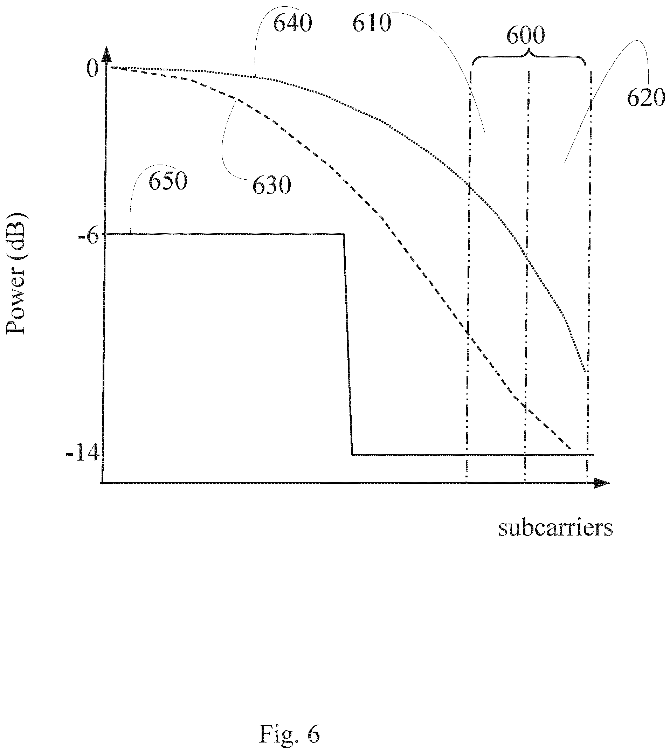

Fig. 6 shows, by way of example, power levels for inband and excess band for two exemplary filters, more aggressive filter ([-0.335 1 -0.335], dash line 630) and a less aggressive filter (truncated RRC, dotted line 640). Solid line 650 shows the power level of maximum attenuation mask. Fig. 6 shows that inner part 610 of the excess band 600 is transmitted with up-to 5 dB higher power compared to the outer part 620 of the excess band 600. Hence, inner part of the excess band contains most of the useful signal power transmitted via the excess band. Indeed, in the simulated case of 8 RB, QPSK, SE=0.5 bit/Hz @ FR1, the link budget of 0.5 dB is reduced to 0.4 dB when half of the excess band subcarriers are ignored at the receiver. The shaping function may be left for LTE implementation. Typically, this requires that DMRS and data are shaped by the same function. The filter selection may be controlled by standard specification. For example, the maximum attenuation for the frequency domain filter (i.e. FDSS function) may be limited according to predefined spectral flatness requirements or maximum attenuation mask. The mask may cover both inband and excess bands. For example, 50% of the total band may be attenuated at most by 6 dB, while the rest of the spectrum may be attenuated at most by 14 dB. There may be one or more shaping functions available at the UE fulfilling the spectral flatness requirements, e.g. a more aggressive one and a less aggressive one. UE may select the shaping function e.g. according to the number of RBs allocated.

Outer excess bands may be used for PUSCH detection as well. Use of outer excess band resources may improve transmitter PAPR and output power backoff (OBO) reduction.

The method as disclosed herein provides UE chip vendors freedom to either use simple spectral extension for FDSS (simpler) or apply implementation specific solutions on top of FDSS, e.g. based on TR (more complex) or a symbol specific combination of FDSS-SE and TR techniques and improving the FDSS performance and UE coverage further. The method as disclosed herein enables that: implementation specific solution remains transparent to gNB; a reasonable combined resource overhead from FDSS and e.g. TR is maintained; PUSCH detection may be improved with the utilization of LTE data signal transmitted on the excess band (either only on the inner excess band or the whole excess band); and multiple DMRS options may be used.

LTE may recognize that the signal in the outer part of the spectrum extension might not yield fundamental performance increase at the receiver. However, the reserved tones would have non-negligible impact at the transmitter side, since their impact is measured in "how much the tones can avoid the Tx signal to clip" rather than in "how significant increase in overall received signal power at the Rx the tones provide". To achieve the first impact at the transmitter, even a relatively small signal power is enough.

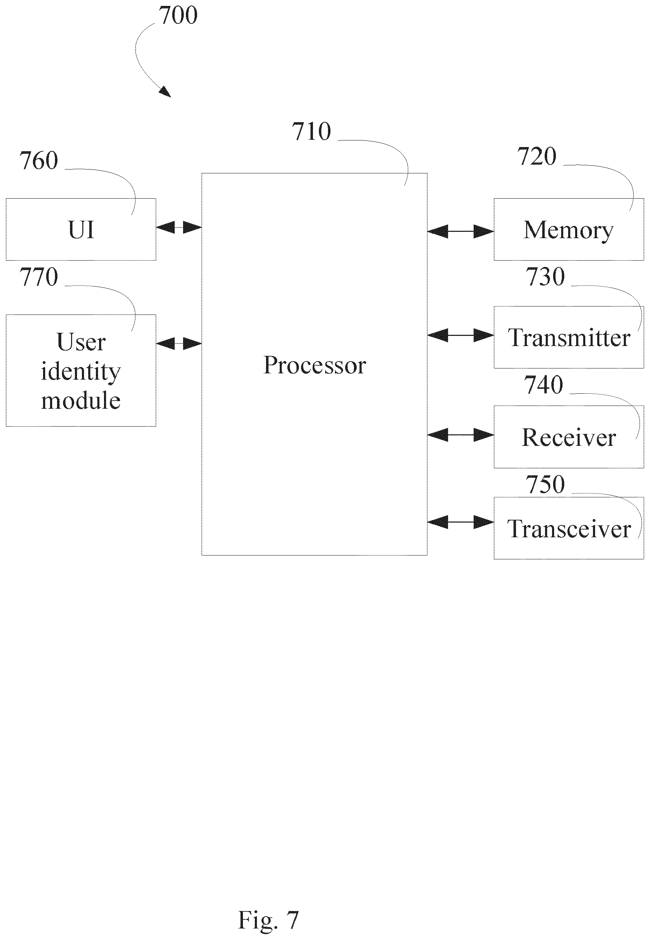

Fig. 7 shows, by way of example, a block diagram of an apparatus capable of performing the method as disclosed herein. Illustrated is device 700, which may comprise, for example, a mobile communication device such as mobile 100 of Fig. 1, or a network node, such as a gNB. Comprised in device 700 is processor 710, which may comprise, for example, a single- or multi-core processor wherein a single-core processor comprises one processing core and a multi-core processor comprises more than one processing core. Processor 710 may comprise, in general, a control device. Processor 710 may comprise more than one processor. Processor 710 may be a control device. A processing core may comprise, for example, a Cortex-A8 processing core manufactured by ARM Holdings or a Steamroller processing core designed by Advanced Micro Devices Corporation. Processor 710 may comprise at least one Qualcomm Snapdragon and/or Intel Atom processor. Processor 710 may comprise at least one application-specific integrated circuit, ASIC. Processor 710 may comprise at least one field-programmable gate array, FPGA. Processor 710 may be means for performing method steps in device 700. Processor 710 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or network node, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 700 may comprise memory 720. Memory 720 may comprise random-access memory and/or permanent memory. Memory 720 may comprise at least one RAM chip. Memory 720 may comprise solid-state, magnetic, optical and/or holographic memory, for example. Memory 720 may be at least in part accessible to processor 710. Memory 720 may be at least in part comprised in processor 710. Memory 720 may be means for storing information. Memory 720 may comprise instructions, such as computer instructions or computer program code, that processor 710 is configured to execute. When instructions configured to cause processor 710 to perform certain actions are stored in memory 720, and device 700 overall is configured to run under the direction of processor 710 using instructions from memory 720, processor 710 and/or its at least one processing core may be considered to be configured to perform said certain actions. Memory 720 may be at least in part external to device 700 but accessible to device 700.

Device 700 may comprise a transmitter 730. Device 700 may comprise a receiver 740. Transmitter 730 and receiver 740 may be configured to transmit and receive, respectively, information in accordance with at least one cellular or non-cellular standard. Transmitter 730 may comprise more than one transmitter. Receiver 740 may comprise more than one receiver. Transmitter 730 and/or receiver 740 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example.

Device 700 may comprise a near-field communication, NFC, transceiver 750. NFC transceiver 750 may support at least one NFC technology, such as NFC, Bluetooth, Wibree or similar technologies.

Device 700 may comprise user interface, UI, 760. UI 760 may comprise at least one of a display, a keyboard, a touchscreen, a vibrator arranged to signal to a user by causing device 700 to vibrate, a speaker and a microphone. A user may be able to operate device 700 via UI 760, for example to accept incoming telephone calls, to originate telephone calls or video calls, to browse the Internet, to manage digital files stored in memory 720 or on a cloud accessible via transmitter 730 and receiver 740, or via NFC transceiver 750, and/or to play games.

Device 700 may comprise or be arranged to accept a user identity module 770. User identity module 770 may comprise, for example, a subscriber identity module, SIM, card installable in device 700. A user identity module 770 may comprise information identifying a subscription of a user of device 700. A user identity module 770 may comprise cryptographic information usable to verify the identity of a user of device 700 and/or to facilitate encryption of communicated information and billing of the user of device 700 for communication effected via device 700.

Processor 710 may be furnished with a transmitter arranged to output information from processor 710, via electrical leads internal to device 700, to other devices comprised in device 700. Such a transmitter may comprise a serial bus transmitter arranged to, for example, output information via at least one electrical lead to memory 720 for storage therein. Alternatively to a serial bus, the transmitter may comprise a parallel bus transmitter. Likewise processor 710 may comprise a receiver arranged to receive information in processor 710, via electrical leads internal to device 700, from other devices comprised in device 700. Such a receiver may comprise a serial bus receiver arranged to, for example, receive information via at least one electrical lead from receiver 740 for processing in processor 710. Alternatively to a serial bus, the receiver may comprise a parallel bus receiver.

Processor 710, memory 720, transmitter 730, receiver 740, NFC transceiver 750, UI 760 and/or user identity module 770 may be interconnected by electrical leads internal to device 700 in a multitude of different ways. For example, each of the aforementioned devices may be separately connected to a master bus internal to device 700, to allow for the devices to exchange information. However, as the skilled person will appreciate, this is only one example and depending on the embodiment various ways of interconnecting at least two of the aforementioned devices may be selected.

The term "non-transitory" as used herein, is a limitation of the medium itself (i.e., tangible, not a signal) as opposed to a limitation on data storage persistency (e.g., RAM vs. ROM).

As may be used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

## Claims

1. An apparatus comprising means for:
receiving a configuration comprising a resource allocation;
determining a spectral extension for an inband allocation by determining a first excess band on one side of the inband allocation and a second excess band on another side of the inband allocation;
determining an inner portion of the first excess band to obtain a first inner excess band;
determining an inner portion of the second excess band to obtain a second inner excess band;
determining an outer portion of the first excess band to obtain a first outer excess band;
determining an outer portion of the second excess band to obtain a second outer excess band;
generating, based on an inband signal, a spectral extension data signal at least on resources on the first inner excess band and on the second inner excess band;
generating, based on the inband signal and the first excess band and the second excess band, a reference signal at least on resources on the first inner excess band and on the second inner excess band;
generating an outer excess band signal on resources on the first outer excess band and on the second outer excess band, wherein the outer excess band signal comprises a different type of signal than the spectral extension data signal and the reference signal.

2. The apparatus of claim 1, further comprising means for:
transmitting the spectral extension data signal and the reference signal at least on the resources of the inband, the first inner excess band and the second inner excess band; and
transmitting the outer excess band signal on the resources of the first outer excess band and the second outer excess band.

3. The apparatus of claim 1 or 2, wherein the determining the inner portion of the first excess band to obtain the first inner excess band comprises means for:
determining an amount of the first inner excess band resources based on a ratio defining a portion of the first excess band to correspond to the first inner excess band.

4. The apparatus of claim 3, wherein the ratio is configured by network or determined by the apparatus.

5. The apparatus of any preceding claim,
wherein the first excess band and the second excess band are symmetrically allocated on both sides of the inband allocation.

6. The apparatus of any preceding claim, wherein the outer excess band signal comprises a remaining portion of the spectral extension data signal for data symbols or a remaining portion of the reference signal for reference signal symbols.

7. The apparatus of claim 6,
wherein the remaining portion of the spectral extension data signal or the remaining portion of the reference signal are weighted by a different type of a frequency domain spectral shaping function than the signals on the inband and the first inner excess band and the second inner excess band.

8. The apparatus of any of the claims 1 to 5, wherein the outer excess band signal comprises a remaining portion of the spectral extension data signal for data symbols and peak reduction tones for reference signal symbols.

9. The apparatus of any of the claims 1 to 5, wherein the outer excess band signal comprises peak reduction tones for data symbols and for reference signal symbols.

10. The apparatus of any preceding claim, wherein the outer excess band signal is **characterized by** at least one of:
- a number of resource elements on the outer excess bands varies from a symbol to another;
- a number of resources elements is different for data symbols and reference signal symbols;
- the outer excess band signal is a zero power reference signal;
- a transmit power on the outer excess bands may be limited with a value specified for the outer excess bands; or
- a power spectral density on the outer excess bands may be limited with a value specified for the outer excess bands.

11. The apparatus of any preceding claim, further comprising means for:
performing frequency domain spectral shaping at least for resources on the inband, the first inner excess band and the second inner excess band.

12. The apparatus of any of the claims 1 to 10, further comprising means for:
performing frequency domain spectral shaping for resources on the inband, the first inner excess band, the second inner excess band, the first outer excess band and the second outer excess band.

13. The apparatus of any preceding claim, wherein the reference signal is a demodulation reference signal.

14. An apparatus comprising means for:
transmitting, to a user equipment, a configuration comprising a resource allocation, wherein
the configuration further comprises instructions for the user equipment for:
determining spectral extension for an inband allocation, the determining comprising determining a first excess band on one side of the inband allocation and a second excess band on another side of the inband allocation; and
determining a first inner excess band and a second inner excess band; and
determining a first outer excess band and a second outer excess band.

15. The apparatus of claim 14, further comprising means for:
monitoring a transmission using inband; or using the inband and the inner excess bands.
